# EUROPÄISCHE PATENTSCHRIFT

(11) **EP 1 340 733 B1**
(45) Veröffentlichungstag und Bekanntmachung des Hinweises auf die Patenterteilung: **22.06.2011**
(21) Anmeldenummer: 03003531.5
(22) Anmeldetag: 17.02.2003
(51) Int. Cl.: C04B 35/83, C04B 35/573, F16D 69/02

(54) **Keramische Verbundwerkstoffe mit unidirektionaler Ausrichtung der Verstärkungsfasern und Verfahren zu deren Herstellung**
Ceramic composite with unidirectional alignment of the reinforcement fibers and method of their production
Composites céramiques avec alignement unidirectionnel des fibres de renforcement et leur procédé de fabrication

(30) Priorität: 28.02.2002 DE 10208991
(43) Veröffentlichungstag der Anmeldung: 03.09.2003
(73) Patentinhaber: SGL Carbon SE, 65203 Wiesbaden (DE)
(72) Erfinder: Benitsch, Bodo, 86647 Buttenwiesen (DE)

(56) Entgegenhaltungen:
- EP-A- 0 202 145
- EP-A- 0 926 111
- EP-A- 1 028 098
- EP-A- 1 028 099

## Beschreibung

Die Erfindung bezieht sich auf keramische Verbundwerkstoffe mit unidirektionaler Ausrichtung der Verstärkungsfasern und Verfahren zu deren Herstellung.

Bauteile aus Faser-Verbundwerkstoffen, bei denen die Faserausrichtung überwiegend mit der Hauptbelastungsrichtung des Bauteils übereinstimmt, sind seit langem bekannt. Für thermisch hochbelastete Bauteile haben sich hier in besonderem Maße Verbundwerkstoffe aus kohlenstoffaserverstärktem Kohlenstoff bewährt (als C/C, CFC oder englisch CFRC, "carbon fibre reinforced carbon", bezeichnet). Aufgrund der Oxidationsempfindlichkeit der C/C-Werkstoffe bei hohen Temperaturen an Luft bleiben dieser Werkstoffklasse aber zahlreiche technisch interessante Anwendungsgebiete verschlossen. Eine wesentliche Verbesserung dieser nachteiligen Eigenschaft konnte mit der Einführung von mit Kohlenstoffasern verstärkten keramischen Verbundwerkstoffen erreicht werden, deren Matrix Siliciumcarbid enthält, zu denen die C/SiC- (die Matrix ist Siliciumcarbid) oder C/C-SiC-Werkstoffe (die Matrix enthält Kohlenstoff und Siliciumcarbid sowie gegebenenfalls Silicium) zählen. Neben reinen Kohlenstoffasern können auch andere Verstärkungsfasern z. B. auf Kohlenstoffbasis (z. B. Fasern aus Carbiden wie SiC) verwendet werden.

Typische Verfahren zur Herstellung von C/SiC-Bauteilen mit Kurzfaserverstärkung sind beispielsweise aus der DE-A 197 10 105 bekannt und umfassen unter anderem die folgenden Schritte:
- Herstellen einer preßfähigen und härtbaren Mischung, die C-Fasern oder Faserbündel sowie Bindemittel wie beispielsweise Phenolharze und gegebenenfalls Füllstoffe enthält
- Formgebung der Mischung und Aushärtung zu einem Grünkörper aus CFK (mit Kohlenstoffasern verstärktem Kunststoff), im allgemeinen unter Druck und erhöhter Temperatur
- Carbonisierung der kohlenstoffhaltigen Füllstoffe und Bindemittel zur Herstellung eines C/C- Formkörpers
- Infiltrieren des Formkörpers mit einer Silicium-Schmelze und zumindest partielle Reaktion des Kohlenstoffs im Formkörper zu SiC.

Die bei diesen Verfahren verwendeten Kurzfasern mit Längen von bis zu ca. 30 mm sind häufig isotrop ausgerichtet, so daß die Zugfestigkeit des C/SiC-Bauteils in allen Raumrichtungen im wesentlichen gleich ist. Liegen im Bauteil auf Grund von dessen Geometrie und Belastung Lastzustände vor, die sich auf eine oder wenige diskrete Raumrichtungen beschränken, so müssen die Fasern bevorzugt parallel zu dieser Belastungsrichtung ausgerichtet sein, um den maximalen Verstärkungseffekt der Fasern nutzen zu können. Hierzu werden für faserverstärkte Keramikverbundwerkstoffe üblicherweise Lang- oder Endlosfasern verwendet, die dann vorzugsweise oder durchweg in Richtung der Spannungstensoren liegen. Dabei werden solche Fasern als Langfasern bezeichnet, deren Länge bei mindestens 50 mm, bevorzugt mindestens 75 mm, und insbesondere mindestens 100 mm liegt. Üblicherweise werden Endlosfasern (Rovings) eingesetzt, deren Länge in der Anwendung nur durch die Abmessungen der damit hergestellten Bauteile beschränkt ist. Parallele Gelege von Endlosfasern oder Langfasern bezeichnet man als "unidirektionale (UD-) Fasergelege". Bei der Herstellung von langfaserverstärktem C/SiC erfolgt die Fertigung von Grünkörpern aus CFK üblicherweise durch Aufeinanderschichten von Fasermatten oder Fasergewebelagen in der Prepregtechnologie.

In EP-0926 111-A ist ein Faserverbundwerkstoff und Verfahren zu seiner Herstellung aus einem C/C Verbund beschrieben wobei,
- Kohlenstofffaserbündel werden hergestellt
- eine weiche Beschichtung aus Kunststoff (thermisch-plastisches Harz) wird um das Kohlenstofffaserbündel herum angeordnet, um eine weiches Zwischenmaterial zu erhalten. Das Zwischenmaterial wird so ausgebildet dass es eine Garngestalt aufweist und, nach Laminierung, mittels Heißpressen geformt wird.
- Danach wird das geformte Produkt karbonisiert und in Graphit verwandelt um ein gebranntes Produkt zu erhalten.
- Dieses gebrannte Produkt wird danach mit geschmolzenen Silizium durch die Poren imprägniert und Si-SiC-Material ausgebildet

Für die spätere Silicierung und Bildung der SiC-Matrix ist das sich bei der Carbonisierung des CFK zum CFC-Körper einstellende Porengefüge von entscheidender Bedeutung, denn nur durch ein geeignetes Porengefüge kann gewährleistet werden, daß das flüssige Silicium gleichmäßig und in genügender Menge in den CFC-Körper eindringt.

Die Carbonisierung der Bindeharze und Zuschlagstoffe des CFK-Körpers führt zu einer starken Schwindung der Matrix beim Übergang in den CFC-Zustand. Je nach Art der Faserverstärkung können die Fasern oder Faserstränge (Rovings) dieser Bewegung nachfolgen oder nicht. So werden zum Beispiel Fasergewebe aus Kette und Schuß, also zwei sich kreuzenden Fadensystemen aufgebaut (2D-Faseranordnung in x- und y-Richtung). Die bei der Carbonisierung auftretende Volumenschwindung wird durch die in der Ebene (x, y-Ebene) des Gewebes liegenden Fasern behindert, so daß ein charakteristisches Mikrorißmuster mit durchgängigen Kapillaren in der zu der Ebene senkrechten Richtung (z-Richtung) entsteht.

Liegt eine isotrope dreidimensionale Faseranordnung vor, so können die Fasern oder Faserstränge der Kontraktion der Matrix in keiner der Raumrichtungen folgen, und es entsteht ein nach allen Seiten offenes und durchgängiges Mikrorißgefüge.

Sind die Rovings der Verstärkungsfasern dagegen parallel ausgerichtet und ohne Fixierung in der Ebene, so führt die Carbonisierung der Binderharze zu einer ungehinderten Kontraktion senkrecht zur Faserausrichtung, so daß die Rovings im CFC sehr dicht aufeinander schrumpfen und mit minimalem Anteil an offener Porosität nebeneinander zu liegen kommen. Die Flüssigsilicierung wird hierdurch erschwert, weil das Porenvolumen und die Verteilung von Kapillaren (Mikrokanälen) im Inneren des Werkstoffs im Vergleich zu den mit Kurzfasern isotrop verstärkten CFC-Vorkörpern ungünstig verändert werden. Ein zusätzliches Problem kann sich dadurch ergeben, daß die Rovings oder Faserstränge während der Silicierung in unkontrollierter Weise auseinandergeschwemmt werden. Nach der herkömmlichen Technik ist es daher bislang nicht möglich, bei mit unidirektionalen Fasern ("UD-Fasern") verstärkten C/SiC-Werkstoffen zu befriedigenden Eigenschaften zu kommen.

Aufgabe der Erfindung ist es daher, solche Faserverbundwerkstoffe mit Siliciumcarbid enthaltender Matrix bereitzustellen, die mit Verstärkungsfasern, insbesondere Kohlenstoffasern, in unidirektionaler Anordnung verstärkt sind, wobei das flüssige Silicium bei dem Silicierungsschritt durch Mikrokanäle oder Kapillaren im CFC-Körper ungehindert in das Innere des Körpers eindringen kann und sich mit dem Kohlenstoff der Matrix in der gewünschten Weise zu Siliciumcarbid umsetzen kann. Die Mikrokanäle sollen bevorzugt in Richtung der Rovings ausgebildet werden. Dazu muß ein angepaßtes Verfahren entwickelt werden, mit dem solche unidirektional faserverstärkte CFK- und CFC-Vorkörper herzustellen sind, die für die Flüssigsilicierung zur Herstellung von C/SiC-Bauteilen geeignet sind und insbesondere die oben genannten Nachteile des Standes der Technik nicht aufweisen.

Die Aufgabe wird dadurch gelöst, daß die zur Herstellung der CFK-Körper eingesetzten Faserstränge oder Rovings mit Polymeren, sogenannten "Opferpolymeren" umhüllt werden, die das Aufeinanderschrumpfen der parallel ausgerichteten Rovings während der Carbonisierung des CFK-Körpers verhindern und zu einer günstigen Porenkanalstruktur führen. Als "Opferpolymere" werden im folgenden solche polymeren Stoffe bezeichnet, die bei der Carbonisierung (Wärmebehandlung von CFK-Körpern in einer nicht oxydierenden Atmosphäre bei Temperaturen von ca. 750 bis ca. 1100 °C) thermisch zersetzt werden, wobei sie entweder rückstandsfrei oder im wesentlichen rückstandsfrei zersetzt werden, oder bevorzugt ein Rückstand aus Kohlenstoff in einer Menge von ca. 10 bis ca. 60 % der Masse des eingesetzten Polymeren zurückbleibt. Liegt die Masse des im wesentlichen aus Kohlenstoff bestehenden Pyrolyserückstands eines Polymeren oberhalb von ca. 10 % von dessen Masse, so wird dies als carbonisierbares Polymer bezeichnet. Gemäß der Erfindung ist es auch möglich, solche Polymere einzusetzen, die rückstandsfrei oder im wesentlichen rückstandsfrei (d. h. einen Rückstand von bis zu 10 % der Polymeren hinterlassend) thermisch zersetzt, d.h. vollständig oder nahezu vollständig pyrolysiert, werden. Die Polymeren werden bevorzugt in Form von Fasern ("Opferfasern") in den CFK-Körper eingebracht. Bevorzugt sind die Rovings der Verstärkungsfasern dabei einzeln von Opferfasern umhüllt oder durch Opferfasern voneinander getrennt. Besonders bevorzugt ist ein Mischgarn, das sowohl Verstärkungsfasern als auch Opferfasern enthält, die notwendigerweise in der gleichen Richtung ausgerichtet sind. Bei der Carbonisierung des CFK-Vorkörpers, der bevorzugt aus mit Opferfasern umhüllten Rovings und Binderharz besteht, werden die Opferfasern thermisch zersetzt (pyrolysiert oder carbonisiert), so daß hierdurch Poren und Mikrokanäle mit gezielter Geometrie und Ausrichtung erzeugt werden, nämlich solche in Form der inzwischen zersetzten Polymeren, und in derselben geometrische Ausrichtung wie die Verstärkungsfasern. Der Pyrolyserückstand bzw. der Carbonisierungsrückstand der Opferfasern, der im wesentlichen aus Kohlenstoff besteht und in Form von losen Partikeln an der Stelle der zersetzten Polymeren verbleibt und insbesondere keine auf den Verstärkungsfasern haftende Schicht ergibt, verhindert das Aufeinanderschrumpfen der Rovings und stabilisiert so die Hohlräume entlang der Faserstränge oder Rovings, die sich durch den Volumenschwund der zersetzten Polymeren (Opferfasern) bilden. Da die Polymeren die Faserstränge der Verstärkungsfasern umhüllen oder in Faserform parallel zu ihnen verlaufen, bilden sich an der Stelle der zersetzten Polymeren die gewünschten Kapillaren oder Mikrokanäle in der gewünschten Ausrichtung.

Gegenstand der vorliegenden Erfindung ist daher ein Verfahren zur Herstellung von keramischen Verbundwerkstoffen mit unidirektionaler Ausrichtung der Verstärkungsfasern, dadurch gekennzeichnet, daß
- zunächst Faserstränge oder Rovings der Verstärkungsfasern mit einem Opferpolymer umhüllt oder durch diese voneinander getrennt werden,
- die derart bearbeiteten Faserstränge oder Rovings unter Zusatz von Binderharzen zu unidirektional verstärkten CFK-Formkörpern verarbeitet werden,
- die gebildeten CFK-Körper carbonisiert werden zu CFC-Körpern,
wobei sich das Polymer bei dem Carbonisierungsschritt entweder vollständig oder nahezu vollständig zersetzt unter Bildung eines Rückstandes mit einer Masse von bis zu 10 % der Masse des in Form von Fasern eingesetzten Polymeren, oder sich unter Bildung eines Kohlenstoff enthaltenden Rückstandes von 10 bis 60 % der Masse des eingesetzten Polymeren zersetzt, wobei sich eine Porenkanalstruktur bildet, und das Volumenverhältnis des Polymeren zu den Fasersträngen oder Rovings von 0,05 bis 50 und/oder das Massenverhältnis von Polymeren zu den Fasersträngen oder Rovings von 0,1 bis 25 beträgt, und
- die gebildeten CFC-Körper anschließend mit flüssigem Silicium infiltriert werden derart daß das flüssige Silicium in die im CFC-Körper gebildeten Poren diffundiert und sich dort zumindest anteilsweise mit dem Kohlenstoff zu Siliciumcarbid verbindet.

Das Verfahren gemäß der Erfindung sieht daher im einzelnen vor, zunächst Faserstränge oder Rovings der Verstärkungsfasern mit Opferpolymer zu umhüllen. Im Prinzip sind hierzu alle gängigen Verfahren der Faserbündelbeschichtung wie zum Beispiel die Pultrusion geeignet. Besonders bevorzugt ist jedoch die Umhüllung mittels Fasern aus dem Opferpolymer. Typischerweise werden die Rovings aus Verstärkungsfasern mit Fasern aus dem Opferpolymer in Form von Einzelfilamenten, Garnen oder Rovings umklebt, umwickelt, umgarnt, umwebt oder verwebt. Besonders bevorzugt werden die Rovings aus Verstärkungsfasern mit den Fasern aus dem Opferpolymeren umkordelt oder verzwirnt. Ebenso ist es möglich, auch Gewebe oder Mischgewebe aus diesen Fasern zur Umhüllung der Verstärkungsfasern zu verwenden.

Bei der Wahl des Opferpolymeren spielt besonders dessen Pyrolyseverhalten und der Pyrolyserückstand eine ausschlaggebende Rolle. Bevorzugt werden solche Polymere eingesetzt, die erst oberhalb der Härtungstemperatur der Binderharze des CFK erweichen oder sich zersetzen. Dies sind typischerweise hochschmelzende Thermoplaste mit Erweichungstemperaturen oberhalb von ca. 150 °C oder Duroplaste (auch als Duromere bezeichnet) mit Zersetzungstemperaturen oberhalb von ca. 150 °C. Als Opferpolymer werden 'bevorzugt Polyester, Polyamide, Aramide, Polyacrylnitril, Polyurethane oder Polyimide eingesetzt. Besonders bevorzugt werden die Opferpolymere in Faserform verwendet, insbesondere Polyesterfasern, Aramidfasern, Polyacrylnitrilfasern, Cellulosefasern oder Wollfasern.

Als Verstärkungsfasern werden üblicherweise Kohlenstoffasern (C-Fasern) verwendet. Es lassen sich jedoch auch andere für Hochtemperaturverbundwerkstoffe gängige Fasermaterialien einsetzen. Solche Fasern sind beispielsweise Siliciumcarbidfasern, Siliciumnitridfasern, Bornitridfasern und oxidische Fasern auf der Basis von Aluminiumoxid, Zirkonoxid, Boroxid, Siliciumdioxid, Yttriumoxid und deren Mischungen. Werden C-Fasern verwendet, so kann es von Vorteil sein, einen besonderen Faserschutz gegen den reaktiven Angriff bei der Flüssigsilicierung zu verwenden, der in einer Reaktion des flüssigen Siliciums mit dem Kohlenstoff der Fasern unter Bildung von Siliciumcarbid besteht. Ein solcher Faserschutz kann beispielsweise durch kohlenstoff- oder carbidhaltige Beschichtungen auf den Fasern gebildet werden. Typischerweise werden geschlichtete Fasern eingesetzt.

Die derart umhüllten Faserstränge oder Rovings werden unter Zusatz von Binderharzen in bekannter Weise zu unidirektional verstärkten CFK-Formkörpern verarbeitet. Als Fertigungsverfahren für die Grünkörper sind beispielsweise die Prepreg-Technologie und das sogenannte RTM-Verfahren (Resin Transfer Moulding) gut geeignet. Als Binderharze werden bevorzugt die in der CFK-Technik üblichen Harze, insbesondere Phenolharze, Epoxidharze und Furanharze eingesetzt. Bevorzugt werden als Binderharze carbonisierbare Polymere mit Pyrolyserückständen oberhalb von 10 %, bevorzugt mit Pyrolyserückständen im Bereich von 12 bis 70 % und besonders bevorzugt im Bereich von 15 bis 45 % eingesetzt. Dabei wird hier als Pyrolyserückstand das Verhältnis der Masse des nach der Pyrolyse zurückbleibenden Materials zu Masse des Ausgangsstoffs bezeichnet.

Es ist erfindungsgemäß bevorzugt, den Anteil von Binderharz bei der Fertigung der CFK-Körper zu beschränken. Dabei beträgt der Massenanteil an Binderharz in dem CFK-Körper bevorzugt von 30 bis 75 %, besonders bevorzugt 30 bis 50 %, und insbesondere 35 bis 45 %.

Ein besonderer Vorteil des erfindungsgemäßen Verfahrens liegt darin, daß über die Art und Dicke der Umhüllung mit dem Opferpolymeren in einfacher Weise der Matrixgehalt der später gebildeten C/SiC-Keramik über den Pyrolyserückstand des Opferpolymers und des Bindeharzes und damit die Menge an bei der Carbonisierung gebildeten Kohlenstoff eingestellt werden kann, wobei insbesondere die Verwendung von Opferfasern zu einer einfachen und kostengünstigen Verfahrensweise führt.

Typischerweise liegt das Volumenverhältnis von Opferpolymer zu Roving im Bereich von 0,05 bis 50, bevorzugt im Bereich von 0,1 zu 25 und besonders bevorzugt bei 0,1 zu 10 und das Massenverhältnis von Opferpolymer zu Roving im Bereich von 0,1 bis 25, bevorzugt im Bereich von 1 zu 12 und besonders bevorzugt bei 1 zu 5.

Die gebildeten CFK-Körper, die ungefähr (unter Berücksichtigung der Schrumpfung) die Form des gewünschten Werkstücks aufweisen, werden dann in bekannter Weise carbonisiert. Dabei entstehen die sogenannten CFC-Körper (englisch "CFRC"). In diesem Schritt findet auch die Pyrolyse der Polymere statt, wobei die gewünschten Porenkanäle oder kapillaren entlang den Verstärkungsfasern gebildet werden. Diese werden anschließend mit flüssigem Silicium in ebenfalls bekannter Weise siliciert, wobei das flüssige Silicium durch die Kapillarkräfte in die in dem CFC-Körper gebildeten Poren diffundiert und sich dort zumindest anteilsweise mit dem Kohlenstoff zu Siliciumcarbid verbindet.

Der nach der Silicierung erhaltene Verbundwerkstoff zeichnet sich dadurch aus, daß das Verhältnis des Volumens der Faserstränge oder Rovings zu dem Volumen der die Faserstränge oder Rovings umgebenden Matrix vergleichsweise groß ist, typischerweise oberhalb von 0,5, bevorzugt oberhalb 1 und besonders bevorzugt oberhalb 1,3. Für mechanisch hochbelastete Bauteile mit geringer korrosiver Belastung sind Volumenverhältnisse oberhalb von 2 bevorzugt. Derartige Verbundwerkstoffe sind erstmals über das erfindungsgemäße Verfahren zugänglich.

Ein weiterer Vorteil der Erfindung ist, daß sich sehr gleichmäßige Gefüge ausbilden, mit geringer Streuung der Ausdehnung von Faser und Matrixbereichen. In bevorzugter Weise ist die mittlere laterale Abmessung (gemessen senkrecht zum UD-Faserstrang, also parallel zum Durchmesser der Faserstränge) der Faserstränge oder Rovings größer als die mittlere laterale Abmessung der benachbarten Matrixbereiche, und beträgt bevorzugt mindestens das Doppelte. Die Streuung des Verhältnisses der Ausdehnung der Faserbereiche, gemessen als Durchmesser der Faserstränge oder Rovings der Verstärkungsfasern zur Ausdehnung der benachbarten Matrixbereiche, gemessen wie oben beschrieben, beträgt dabei bevorzugt höchstens 10 %, besonders bevorzugt höchstens 8 %, und insbesondere höchstens 5 %.

Ein weiterer Aspekt der Erfindung ist die Verwendung der unidirektional faserverstärkten Verbundwerkstoffe, insbesondere der mit Kohlenstoffasern verstärkten Verbundwerkstoffe mit einer Siliciumcarbid enthaltenden Matrix, zur Herstellung von Bauteilen. Üblicherweise wird das sogenannte UD-C/SiC als Verstärkungskomponente in komplex aufgebauten Bauteilen eingesetzt. Besonders günstig sind hierbei Bauteile, die aus UD-C/SiC und weiteren C/SiC-Werkstoffvarianten mit davon unterschiedlicher, bevorzugt auch isotroper, Faserausrichtung aufgebaut sind, da sich diese im allgemeinen in einem gemeinsamen Silicierungsschritt integral verbinden lassen. Bevorzugt werden Bauteile mit hohem Anteil an UD-C/SiC für Komponenten der Verbindungstechnik, wie Schrauben, Bolzen, Hülsen oder Rohre in thermisch hochbelasteter Umgebung angewendet. Hier liegt der Volumenanteil des UD- C/SiC bevorzugt oberhalb von 50 % des gesamten Bauteils.

Mit besonderem Vorteil lassen sich die erfindungsgemäßen Verbundwerkstoffe in schnell rotierenden Bauteilen anwenden, beispielsweise in Reibscheiben für Bremsen oder in Kupplungsscheiben. Besonders bevorzugt erfolgt hier die unidirektionale Verstärkung tangential zur Drehachse, also in der Umfangsrichtung der Bauteile.

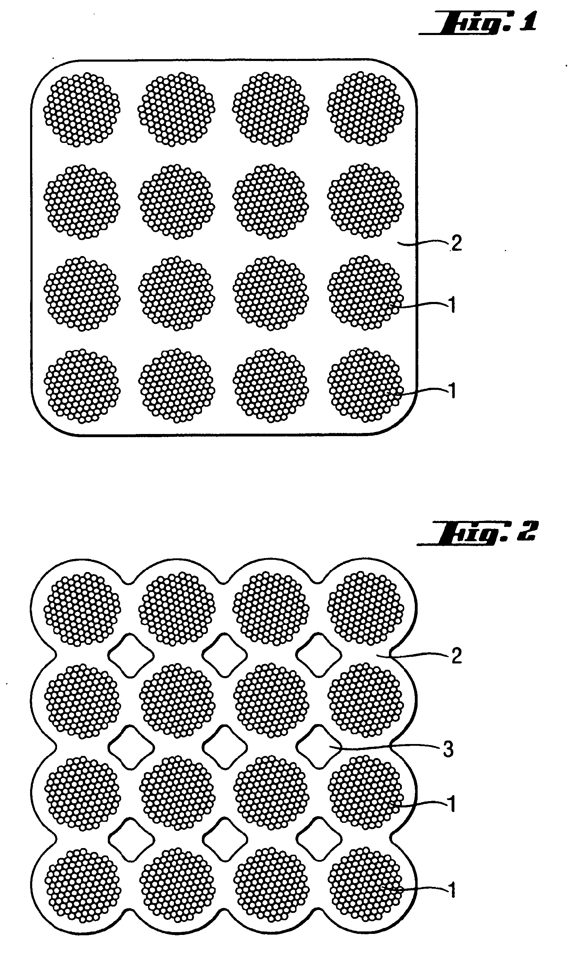

Der Aufbau der erfindungsgemäßen Werkstoffe ist in den Abbildungen Fig. 1 und Fig. 2 dargestellt. Dabei zeigen
- Fig. 1: einen Schnitt durch einen Verbundwerkstoff, wobei die Schnittebene senkrecht zur Faserrichtung verläuft, und
- Fig. 2: einen Schnitt durch einen Verbundwerkstoff mit Porenkanälen, wobei die Schnittebene senkrecht zur Faserrichtung verläuft.

Im einzelnen zeigt die Fig. 1 einen Schnitt durch einen Verbundwerkstoff, der eine kontinuierliche Matrixphase 2 und Faserbündel 1 von Endlosfasern oder Rovings enthält. Die Matrix 2 enthält Phasen aus Siliciumcarbid, Silicium und gegebenenfalls nicht umgesetztem Kohlenstoff.

Es ist auch möglich, die mit Opferpolymeren beschichteten oder mit Fasern, Fasergarnen oder Filamenten aus faserförmigen Opferpolymeren umgebenen Rovings so auszulegen, daß bei der Silicierung die Zwickel zwischen den Faserbündeln nicht vollständig mit Matrix gefüllt werden. Dies wird beispielweise durch weite Kapillaren oder einen Siliciumunterschuß erreicht. So gelangt das Silicium durch die Kapillarkräfte in die die Rovings unmittelbar umgebende Zone, die die carbonisierten Reste der Opferpolymeren und gegebenenfalls des Binderharzes enthält, und reagiert hier mit dem Kohlenstoff zu Siliciumcarbid, wobei die Zwickel zwischen den Faserbündeln ungefüllt bleiben.

Ein Schnitt durch einen nach dieser Ausführungsform hergestellten Verbundwerkstoff ist in der Fig. 2 dargestellt, wobei die Schnittebene wiederum senkrecht zur Richtung der Fasern gelegt ist. Die Rovings **1** werden von einer dünnen Hülle aus Matrixmaterial **2** umgeben, wobei benachbarte Bündel jeweils durch eine Matrixschicht getrennt werden. Zwischen den Faserbündeln verbleiben Hohlräume **3**, die sich entlang den Faserbündeln als Mikrokanäle erstrecken.

### Bezugszeichenliste

- 1: Faserbündel oder Rovings von Verstärkungsfasern
- 2: Matrix
- 3: Hohlraum

## Patentansprüche

1. Verfahren zur Herstellung von keramischen Verbundwerkstoffen mit unidirektionaler Ausrichtung der Verstärkungsfasern, **dadurch gekennzeichnet, dass**
- zunächst Faserstränge oder Rovings der Verstärkungsfasern mit Fasern aus einem Opferpolymer umhüllt werden, wobei das Volumenverhältnis des opferpolymeren zu den Fasersträngen oder Rovings von 0,05 bis 50 und/oder das Massenverhältnis von Opferpolymeren zu den Fasersträngen oder Rovings von 0,1 bis 25 beträgt, und
- die derart bearbeiteten Faserstränge oder Rovings unter Zusatz von Binderharzen zu unidirektional verstärkten CFK-Formkörpern verarbeitet werden,
- die gebildeten CFK-Körper carbonisiert werden zu CFC-Körpern,
wobei sich das Opferpolymer bei der Carbonisierung entweder vollständig oder unter Bildung eines Kohlenstoffrückstandes von bis zu 60 % der Masse des Opferpolymeren zersetzt, wobei sich eine Porenkanalstruktur bildet, und
- die gebildeten CFC-Körper anschließend mit flüssigem Silicium infiltriert werden derart dass das flüssige Silicium in die im CFC-Körper gebildeten Poren diffundiert und sich dort zumindest anteilsweise mit dem Kohlenstoff zu Siliciumcarbid verbindet.

2. Verfahren nach Anspruch 1, **dadurch gekennzeichnet, dass** die Opferpolymeren ausgewählt werden aus Thermoplasten, deren Erweichungstemperatur oberhalb von 150°C liegt, und Duroplasten oder Duromeren, deren Zersetzungstemperatur oberhalb von 150°C liegt.

3. Verfahren nach Anspruch 1, **dadurch gekennzeichnet, dass** die Fasern aus dem Opferpolymer ausgewählt werden aus Polyesterfasern, Aramidfasern, Polyacrylnitrilfasern, Cellulosefasern oder Wollfasern.

4. Verfahren nach Anspruch 1, **dadurch gekennzeichnet, dass** die Faserstränge oder Rovings der Verstärkungsfasern mit Fasern aus dem Opferpolymer umkordelt oder mit Geweben oder Mischgeweben aus Fasern aus dem Opferpolymer umhüllt werden.

5. Verfahren nach Anspruch 1, **dadurch gekennzeichnet, dass** als Verstärkungsfasern Kohlenstofffasern eingesetzt werden,

## Claims

1. Process for producing ceramic composites having unidirectional orientation of the reinforcing fibres, **characterized in that**
- fibre hanks or rovings of the reinforcing fibres are firstly enveloped with fibres of a sacrificial polymer, where the volume ratio of the sacrificial polymer to the fibre hanks or rovings is from 0.05 to 50 and/or the mass ratio of sacrificial polymer to the fibre hanks or rovings is from 0,1 to 25, and
- the fibre hanks or rovings which have been treated in this way are processed with addition of binder resins to give unidirectionally reinforced CFRP mouldings,
- the CFRP bodies formed are carbonized to give CFRC bodies,
where the sacrificial polymer decomposes during the carbonization either completely or to form a carbon residue of up to 60% of the mass of the sacrificial polymer and a pore channel structure is formed, and
- the CFRC bodies formed are subsequently infiltrated with liquid silicon in such a way that the liquid silicon diffuses into the pores formed in the CFRC body and there combines at least partly with the carbon to form silicon carbide.

2. Process according to Claim 1, **characterized in that** the sacrificial polymers are selected from among thermoplastics having a softening temperature above 150°C and thermosets having a decomposition temperature above 150°C.

3. Process according to Claim 1, **characterized in that** the fibres of the sacrificial polymer are selected from among polyester fibres, aramid fibres, polyacrylonitrile fibres, cellulose fibres and wool fibres.

4. Process according to Claim 1, **characterized in that** the fibre hanks or rovings of the reinforcing fibres are wrapped with fibres of the sacrificial polymer or enveloped with woven fabrics or mixed wovens of fibres of the sacrificial polymer.

5. Process according to Claim 1, **characterized in that** carbon fibres are used as reinforcing fibres.

## Revendications

1. Procédé pour la préparation de matériaux composites céramiques présentant une orientation unidirectionnelle des fibres de renforcement, **caractérisé en ce que**
- des brins de fibres ou des stratifils des fibres de renforcement sont d'abord enveloppés de fibres d'un polymère sacrifié, le rapport volumique du polymère sacrifié aux brins de fibres ou aux stratifils étant de 0,05 à 50 et/ou le rapport massique des polymères sacrifiés aux brins de fibres ou aux stratifils étant de 0,1 à 25, et
- les brins de fibres ou stratifils ainsi traités sont transformés, avec addition de résines de liant, en corps façonnés en CFRP (carbone-fibre reinforced plastic - matériau synthétique renforcé par des fibres de carbone) renforcés de manière unidirectionnelle,
- les corps en CFRP formés sont carbonisés en corps en CFC (carbon fibre reinforced carbon - carbone renforcé par des fibres de carbone),
où le polymère sacrifié se décompose lors de la carbonisation, soit complètement, soit en formant un résidu de carbone à raison de jusqu'à 60% de la masse du polymère sacrifié, une structure de canaux de pores se formant, et
- les corps en CFC formés étant ensuite infiltrés de silicium liquide de manière telle que le silicium liquide diffuse dans les pores formés dans le corps en CFC et s'y lie au moins partiellement avec le carbone en carbure de silicium.

2. Procédé selon la revendication 1, **caractérisé en ce que** les polymères sacrifiés sont choisis parmi les thermoplastiques, dont la température de ramollissement est supérieure à 150°C, et les thermodurcissables ou les duromères, dont la température de décomposition est supérieure à 150°C.

3. Procédé selon la revendication 1, **caractérisé en ce que** les fibres du polymère sacrifié sont choisies parmi les fibres de polyester, les fibres d'aramide, les fibres de polyacrylonitrile, les fibres de cellulose ou les fibres de laine.

4. Procédé selon la revendication 1, **caractérisé en ce que** les brins de fibres ou les stratifils sont entourés par une torsade de fibres en polymère sacrifié ou enrobés par des tissus ou des tissus mixtes en fibres en polymère sacrifié.

5. Procédé selon la revendication 1, **caractérisé en ce qu'**on utilise des fibres de carbone comme fibres de renforcement.
